(19) Europäisches Patentamt
European Patent Office
Office européen des brevets

(11) **EP 0 716 751 B1**

(12) **FASCICULE DE BREVET EUROPEEN**

(45) Date de publication et mention
de la délivrance du brevet:
**12.03.1997 Bulletin 1997/11**

(21) Numéro de dépôt: **94925519.4**

(22) Date de dépôt: **19.08.1994**

(51) Int Cl.⁶: **G01S 15/60**

(86) Numéro de dépôt international:
**PCT/FR94/01015**

**WO 95/06885 (09.03.1995 Gazette 1995/11)**

(54) **SYSTEME SONAR POUR COURANTOMETRE ET LOCH DOPPLER**

SONARSYSTEM FÜR STRÖMUNGSGESCHWINDIGKEITMESSER UND DOPPLERLOG

SONAR SYSTEM FOR CURRENT METERS AND DOPPLER LOGS

(84) Etats contractants désignés:
**DE GB NL**

(30) Priorité: **31.08.1993 FR 9310389**

(43) Date de publication de la demande:
**19.06.1996 Bulletin 1996/25**

(73) Titulaire: **THOMSON-CSF
75008 Paris (FR)**

(72) Inventeur: **PERENNES, Marc
F-92402 Courbevoie Cédex (FR)**

(74) Mandataire: **Desperrier, Jean-Louis et al
THOMSON-CSF-S.C.P.I.,
13, Avenue du Président
Salvador Allende
94117 Arcueil Cédex (FR)**

(56) Documents cités:
EP-A- 0 200 041        EP-A- 0 424 239
FR-A- 2 387 454        FR-A- 2 441 180
US-A- 3 603 920        US-A- 3 691 513
US-A- 5 077 700

## Description

La présente invention se rapporte aux systèmes sonars qui permettent soit de mesurer les courants au sein de l'eau, formant ainsi un courantomètre, soit de mesurer la vitesse par rapport au fond de la mer du bateau sur lequel un tel sonar est monté, réalisant ainsi un loch Doppler.

Ces appareils connus sont très proches l'un de l'autre et fonctionnent tous deux par mesure de l'effet Doppler sur les ondes acoustiques rétrodiffusées soit par le fond de la mer soit par les couches d'eau. Les différences éventuelles entre les deux appareils se situent au niveau de l'électronique de traitement du signal reçu et éventuellement au niveau des fréquences utilisées.

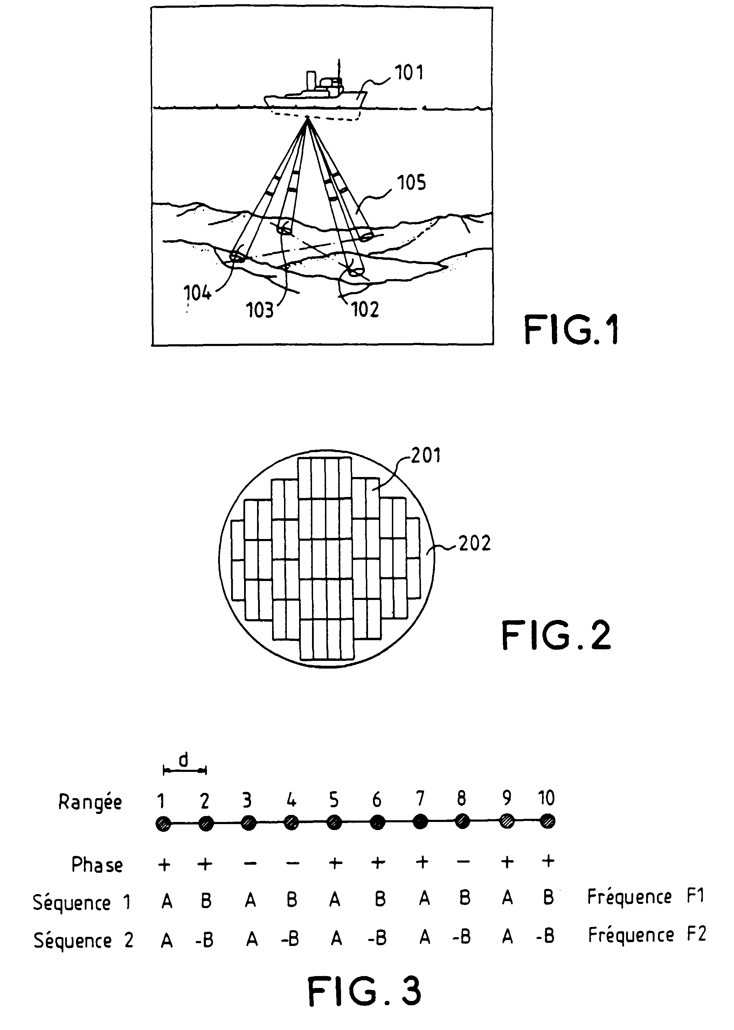

Le plus souvent ces appareils sont conçus selon la configuration dite Janus, représentée schématiquement sur la figure 1, où l'on utilise l'antenne acoustique fixée sous la coque d'un bâtiment 101 pour émettre 4 faisceaux acoustiques 102 à 105. Les deux faisceaux 102 et 103 sont inclinés par rapport à la verticale d'un angle $\alpha$ respectivement vers l'avant et vers l'arrière du bateau dans un plan vertical parallèle à l'axe de ce bateau. Ceci permet d'obtenir la vitesse longitudinale du bateau par rapport au fond de la mer, ou la vitesse des courants marins sur la hauteur d'eau entre la surface et le fond de la mer. Les deux autres faisceaux 104 et 105 sont eux aussi inclinés d'un angle $\alpha$ mais à babord et à tribord du bateau dans un plan vertical perpendiculaire à l'axe du bateau et donc au plan précédent. On obtient ainsi la vitesse latérale du bateau ou des courants marins. La combinaison de ces deux vitesses donne donc la vitesse vraie avec l'angle de dérive.

L'inconvénient principal de ce dispositif est que l'on utilise pour former ces faisceaux généralement pour chaque faisceau un ensemble de transducteurs plans orientés dans la direction voulue, c'est-à-dire au total une antenne formée de 4 secteurs formant sensiblement les 4 faces d'une pyramide relativement plate. Cette antenne est donc de dimensions relativement importantes, ce qui nécessite généralement de faire un trou assez grand dans la coque pour fixer un logement épais rempli de liquide et contenant l'antenne. Ce logement communique avec l'extérieur par une fenêtre acoustique. Ce dispositif est une source potentielle de fuites.

On connait du brevet US 3 603 920 un système permettant d'obtenir une antenne plate, mais la répartition des transducteurs ne permet pas un traitement simple des signaux en émission et en réception.

Pour pallier ces inconvénients, l'invention propose un système sonar pour courantomètre et loch Doppler, qui comprend un ensemble de transducteurs situé sur une base plane destinée à être fixée horizontalement sur le fond de la coque d'un bâtiment porteur, des moyens pour alimenter ces transducteurs avec des signaux présentant une première et une deuxième fréquences distinctes successives et des phases permettant d'obtenir dans au moins un premier plan perpendiculaire au plan de la base un premier lobe d'émission à la première fréquence formant un angle $\alpha$ avec la perpendiculaire au plan de cette base et un deuxième lobe d'émission à la deuxième fréquence formant un angle -$\alpha$ avec cette perpendiculaire, et des moyens de sommation des signaux reçus par les transducteurs pour obtenir deux signaux de réception dans le plan d'émission séparés par leur fréquence, principalement caractérisé en ce que les transducteurs sont alignés en rangées espacées d'une distance d et groupées deux à deux avec une polarité d'alimentation inversée d'un groupe au suivant, et que les moyens d'alimentation permettent de délivrer pour chaque fréquence des signaux A et B déphasés de 90°, ces signaux étant délivrés aux transducteurs selon une première séquence A,B,A,B... avec la première fréquence et selon une deuxième séquence A,-B,A,-B... avec la deuxième fréquence; ces deux séquences déterminant les deux lobes d'émission.

D'autres particularités et avantages de l'invention apparaîtront clairement dans la description suivante, faite à titre d'exemple non limitatif en regard des figures annexées qui représentent :

- la figure 1, une vue en perspective d'un bateau muni d'un sondeur à quatre faisceaux ;
- la figure 2, une vue en plan d'une antenne selon l'invention dans un mode monodimentionnel ;
- la figure 3, un schéma d'alimentation des transducteurs de l'antenne de la figure 2 ;
- la figure 4, une représentation des phases correspondant à la figure 3;
- la figure 5, un schéma de répartition des phases en réception ;
- la figure 6, un schéma synoptique d'un système d'émission et de réception adapté à l'antenne de la figure 2 ;
- la figure 7, une vue en plan d'une antenne selon l'invention dans le cas bidimentionnel ;
- la figure 8, un schéma d'alimentation de l'antenne de la figure 7 pour obtenir des lobes d'émission avant/arrière ;
- la figure 9, un schéma d'alimentation de l'antenne de la figure 7 pour obtenir des lobes tribord/babord ;
- la figure 10, un schéma d'alimentation de l'antenne de la figure 7 pour obtenir des lobes avant/arrière et tribord/babord ;
- la figure 11, un tableau du mode d'alimentation de la répartition de la figure 10 ;
- la figure 12, une répartition des connexions des transducteurs de l'antenne de la figure 7 en mode de réception avant/arrière et tribord/babord ; et
- la figure 13, un schéma synoptique d'un système d'émission-réception adapté à l'antenne de la figure 7.

L'invention sera tout d'abord exposée, pour des raisons de clarté et de simplicité, dans le cas où le système n'utilise que deux lobes, par exemple les lobes avant/arrière 102 et 103 de la figure 1.

On a représenté sur la figure 2 un exemple d'une antenne acoustique formée de transducteurs disposés dans cet exemple sur une surface circulaire pour des raisons de facilité de fabrication de la base supportant cette antenne. Cette forme n'a qu'un intérêt secondaire et n'intervient pas dans l'invention. L'antenne pourrait très bien par exemple avoir une forme carrée ou rectangulaire, cette géométrie n'ayant d'influence que sur l'ouverture du lobe principal et sur le niveau des lobes secondaires du diagramme de rayonnement des ondes acoustiques émises et reçues.

Dans cette exemple, l'antenne est formée d'un ensemble de rangées de transducteurs 201 répartis sur la base circulaire 202 de manière à occuper un maximum de surface de celle-ci.

Ces rangées sont espacées d'environ la moitié de la longueur d'onde à la fréquence de travail, et leur nombre est déterminé, de manière connue, par la largeur souhaitée pour l'ouverture angulaire des lobes principaux.

Selon l'invention, les rangées sont groupées par deux et chaque groupe de rangées est déphasée de 180° par rapport aux groupes adjacents. Ce déphasage peut être obtenu de manière simple par inversion de la polarité des conducteurs d'alimentation des rangées.

Afin de permettre l'émission successive de deux lobes principaux inclinés de part et d'autre de la verticale d'un angle $\alpha$, généralement égal à 30°, comme les lobes 102 et 103 sur la figure 1, on émet successivement une première impulsion de fréquence F1 et une deuxième impulsion de fréquence F2. En alimentant les rangées de l'antenne selon la méthode décrite ci-après, conforme à l'invention, la première impulsion permettra de former le lobe incliné vers l'avant alors que la deuxième inclinaison permettra la formation du lobe incliné vers l'arrière symétriquement par rapport à la verticale.

Pour cela on utilise les signaux électriques aux fréquences désirées, ces signaux étant disponibles avec un déphasage de 90° pour chacune de ces deux fréquences. En appelant A et B les signaux déphasés de 90° quelle que soit la fréquence, on obtient les lobes voulus en appliquant ces signaux aux transducteurs électro-acoustiques des rangées selon les deux séquences représentées schématiquement sur la figure 3.

Sur cette figure la distance d entre les rangées est, comme décrit plus haut, égale à la moitié de la longueur d'onde à la fréquence de travail. Les phases représentées correspondent à celles obtenues par l'inversion de l'alimentation des rangées comme décrit plus haut.

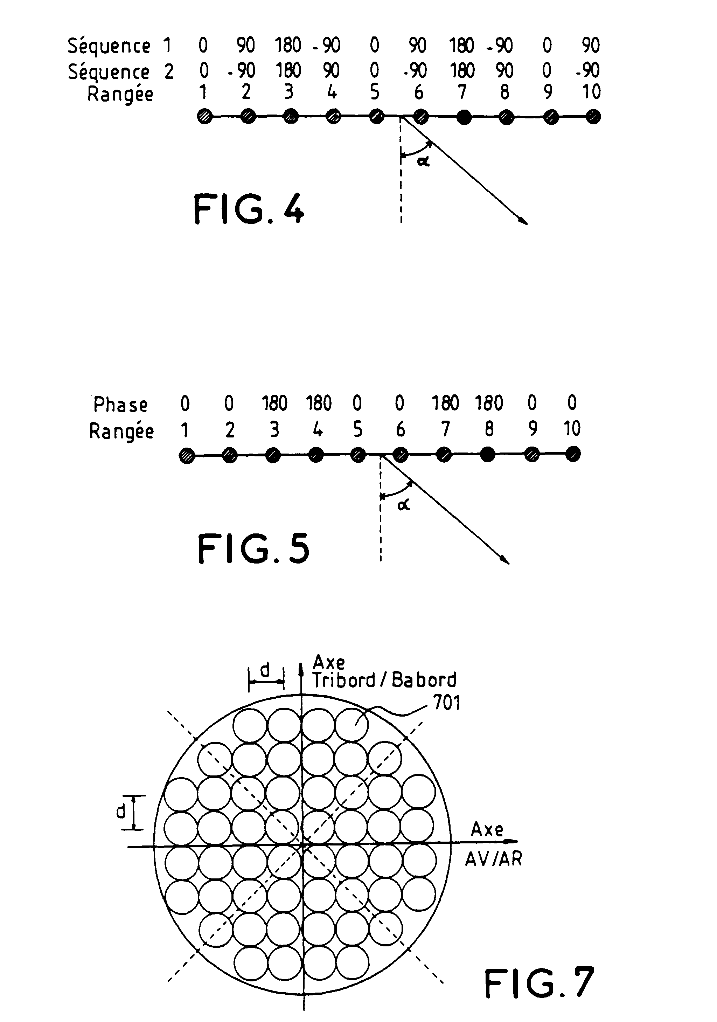

Dans ces conditions la phase des signaux effectivement appliqués sur les transducteurs des rangées est celle représentée sur la figure 4.

On obtient ainsi un diagramme de directivité qui présente un lobe dans une direction $\alpha$, donnée de manière connue par:

$$(1) \qquad \sin \alpha = \frac{\phi}{2\pi\frac{d}{\lambda}}$$

Dans cette formule $\lambda$ est la longueur d'onde de travail, d la distance entre deux rangées adjacentes et $\phi$ le déphasage électrique entre deux colonnes adjacentes.

Lorsque effectivement les rangées sont séparées de $\frac{\lambda}{2}$ pour la séquence 1 le lobe principal est dépointé de + 30° vers l'avant et pour la séquence 2 ce lobe est dépointé de - 30° vers l'arrière (par rapport à la verticale).

Si toutefois on souhaite pour des besoins particuliers que l'angle de dépointage $\alpha$ soit différent de 30°, il suffit de séparer les rangées d'une distance différente de $\frac{\lambda}{2}$ et telle que :

$$(2) \qquad \sin\alpha = +/- \frac{\lambda}{4d}$$

En tenant compte du déphasage de 180° entre chaque groupe de deux rangées, la loi de phase à la réception est représentée sur la figure 5.

Cette configuration est équivalente à celle d'une antenne comportant moitié moins de rangées espacées d'une longueur d'onde et déphasées de 0 ou 180°.

En faisant alors une addition directe des signaux obtenus par les transducteurs en réception, on obtient donc automatiquement un diagramme de réception comportant deux lobes principaux symétriques à +/- $\alpha$, ici +/-30°, par rapport à la verticale.

Cette addition directe donne bien entendu un seul signal de réception dans lequel il faut déterminer celui qui correspond à la fréquence émise vers l'avant de celui qui correspond à la fréquence émise vers l'arrière. Ceci se fait de manière très simple, puisque la fréquence émise vers l'avant F1, est différente de la fréquence émise vers l'arrière F2. Les fréquences reçues sont bien entendu décalées de l'écart Doppler selon chacune des directions, mais compte tenu des vitesses utilisées en navigation maritime ces écarts sont relativement faibles, et en utilisant des fréquences d'émission suffisamment distinctes il n'y a pas de risque de chevauchement des spectres en réception et la séparation des signaux correspondant à l'avant et à l'arrière est très facile à obtenir par un simple filtrage.

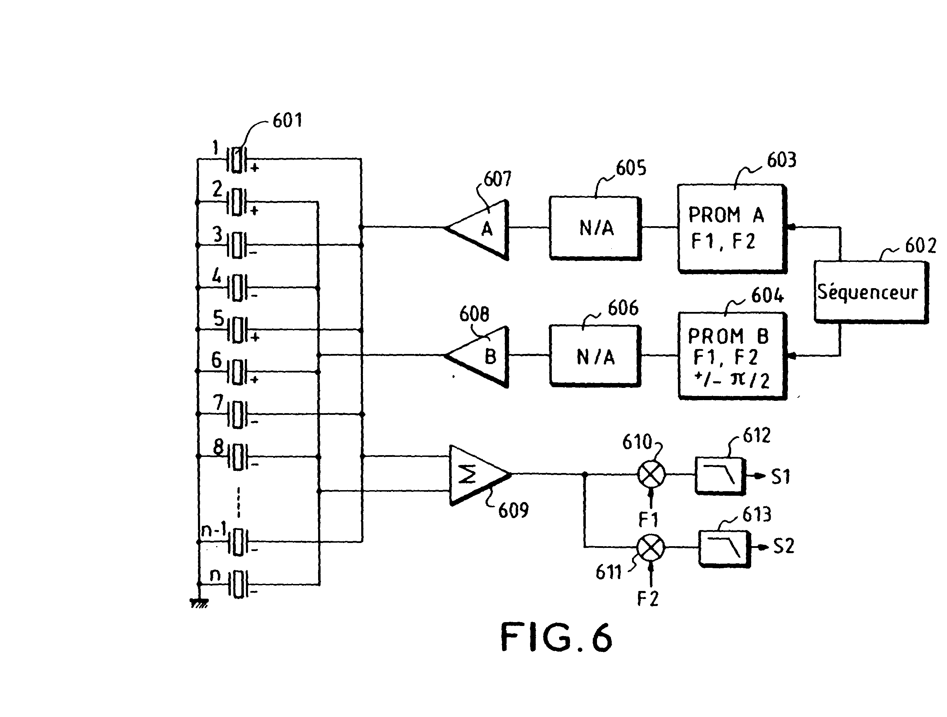

On a représenté sur la figure 6 un schéma simplifié du système électronique permettant d'émettre et de recevoir les signaux sur une telle antenne.

Un séquenceur 602 permet d'obtenir la succession des signaux dans l'ordre voulu. Pour cela il commande la lecture de deux mémoires du type PROM 603 et 604 qui contiennent, sous une forme numérique connue, les fréquences à obtenir avec les phases nécessaires.

La PROM 603 correspond aux signaux A, c'est-à-dire aux fréquences F1 et F2 non déphasées, et la PROM 604 correspond aux signaux B, c'est-à-dire aux signaux F1 et F2 déphasés de +/- $\frac{\pi}{2}$.

Ces PROM sont donc lus sous la commande du séquenceur 602 qui permet d'obtenir les séquences 1 et 2 définies sur la figure 3 et de les faire émettre successivement en respectant entre chaque salve le temps nécessaire pour recevoir les impulsions sonar, de manière connue.

Les signaux numériques provenant de ces PROM sont convertis en analogique dans deux convertisseurs numériques/analogiques 605 et 606. Ces signaux analogiques sont ensuite amplifiés dans des amplificateurs 607 et 608, qui alimentent chacun un ensemble des rangées de transducteur 601 formant l'antenne. Ces ensembles sont répartis comme défini plus haut avec les polarités inversées comme également défini plus haut.

Pour la réception, toutes les rangées de transducteurs 601 sont réunis à un amplificateur-sommateur 609 qui alimente deux mélangeurs 610 et 611 dont chacun est ainsi alimenté respectivement par les fréquences F1 et F2 jouant le rôle d'oscillateur local pour démoduler les signaux reçus. Les signaux en bande de base ainsi obtenus sont ensuite filtrés respectivement dans des filtres 612 et 613 qui permettent d'éliminer les signaux d'intermodulation parasites, en particulier ceux correspondant à l'autre canal.

On obtient ainsi sur les sorties S1 et S2 de ces filtres les signaux sonars S1 et S2 correspondant aux deux voies avant et arrière du loch ou du courantomètre.

Outre l'avantage d'avoir une antenne plate de dimensions restreintes pouvant être installée facilement dans un logement de faible épaisseur sans fenêtre acoustique et situé au ras de la coque du navire porteur, l'invention offre également l'avantage que la relation liant la vitesse à mesurer et l'écart Doppler caractéristique de cette vitesse est indépendante de la vitesse des ondes acoustiques dans le milieu de propagation.

En effet la relation 1 peut s'écrire sous la forme :

$$(3) \qquad \frac{\sin\alpha}{c} = \frac{\phi}{2\pi f d} = Cte$$

La relation entre l'écart Doppler Fd et la vitesse V à mesurer est donc donnée par, Fe étant la fréquence de mesure et c la vitesse des ondes acoustiques dans le milieu de propagation :

$$(4) \qquad Fd = Fe \times 2V \times \frac{\sin\alpha}{c} = Fe \times 2V \times Cte$$

On constate que dans cette formule la vitesse c disparaît.

Le système qui vient d'être décrit pour des faisceaux avant/arrière s'applique pour une orientation quelconque de l'antenne, qui pourrait être aussi bien tribord/babord.

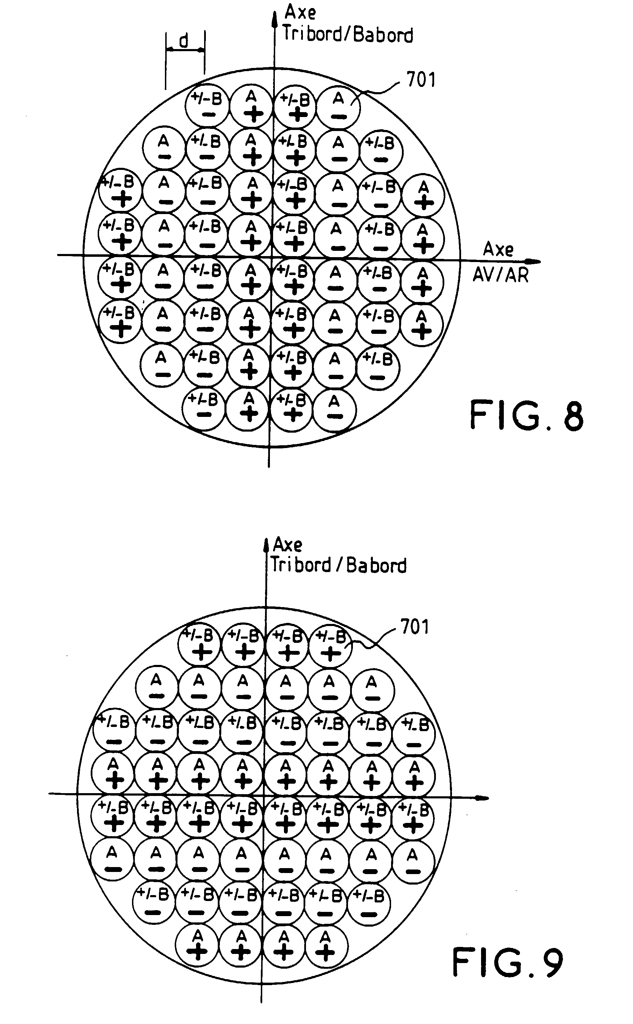

Pour étendre l'invention à un système permettant d'obtenir simultanément les 4 faisceaux avant/arrière et babord/tribord, on propose d'utiliser une antenne semblable à celle de la figure 7, dans laquelle n transducteurs 701, ici 52, sont régulièrement espacés avec un pas d, de préférence égal à une demi-longueur d'onde à la fréquence de travail, selon les deux axes principaux avant/arrière et tribord/babord. La forme de cette antenne pourrait être quelconque, mais afin de simplifier la réalisation, en particulier pour obtenir des lobes relativement réguliers et symétriques, on aura intérêt à garder une symétrie non seulement par rapport aux axes principaux ainsi définis mais également par rapport aux diagonales à +/- 45° de ces axes principaux. Dans l'exemple décrit, l'antenne est circulaire et est formée de 52 transducteurs eux-mêmes circulaires.

Une première solution peut être d'obtenir séparément les faisceaux avant/arrière, puis tribord/babord, et ainsi de suite.

Pour cela, on peut alimenter les transducteurs comme représentés sur la figure 8. Les signes + et - en gros traits correspondent aux polarités d'alimentation des transducteurs et les lettres A et +/- B correspondent aux signaux électriques appliqués sur ces transducteurs selon la définition précédente. On constate ainsi que l'antenne et les faisceaux obtenus sont strictement équivalents à ceux décrits plus haut.

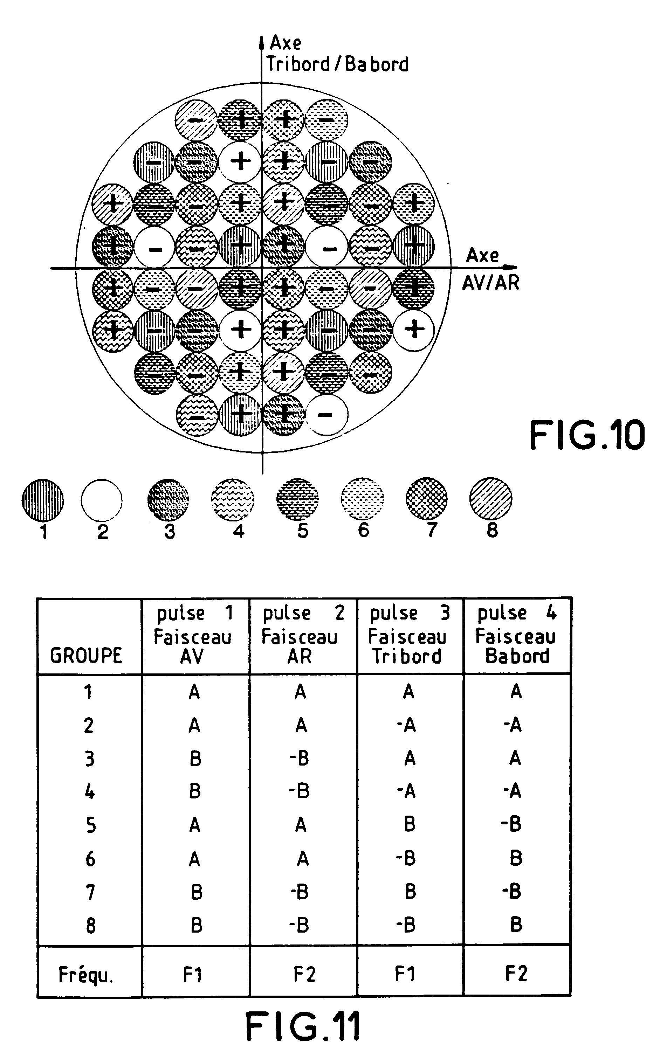

En faisant tourner l'antenne de 90°, on obtiendra des faisceaux orientés tribord/babord de la même manière. Bien entendu une rotation mécanique est tout à fait inutile et on peut obtenir le même résultat en modifiant l'alimentation des transducteurs de la manière représentée sur la figure 9.

En comparant les configurations des figures 8 et 9, on constate que lorsqu'on passe de l'une à l'autre on obtient, selon les transducteurs, les changements suivants :

- la polarité et le signal électrique ne changent pas,
- seule la polarité ne change pas,
- seul le signal appliqué ne change pas,
- la polarité et le signal appliqué changent tous les deux.

Le changement de polarité des transducteurs correspond normalement à une commutation sur les fils de connexion auxquels il est branché, ce qu'il est hautement souhaitable d'éviter. On peut arriver à ce résultat en modifiant simplement le signe des signaux A et B appliqués sur ces transducteurs, pour retrouver successivement les deux configurations monodimensionnelles.

La synthèse de ce résultat peut se représenter d'une manière graphique simple sur la figure 10 en référence au tableau de la figure 11.

On constate que les transducteurs se répartissent en 8 groupes selon la polarité et le signal qui doit leur être appliqué pour obtenir au choix les deux faisceaux avant/arrière ou tribord/babord. Ces groupes numérotés 1 à 8 sont identifiés sur la figure par une trame distincte. Pour obtenir donc l'émission successive des deux faisceaux avant/arrière et tribord/babord, on applique sur les transducteurs des signaux électriques correspondant à des fréquences F1 ou F2, avec des phases définies par A ou B selon la définition vue dans le cas du système monodimensionnel, selon une succession de quatre impulsions correspondant à la répartition des fréquences et des polarités données dans le tableau de la figure 11. Ainsi l'impulsion 1 correspondra à une fréquence F1 dont les signaux A seront appliqués sur les transducteurs appartenant aux groupes 1, 2, 5 et 6 et les signaux B sur les transducteurs correspondant aux groupes 3, 4, 7 et 8. La deuxième impulsion est à la fréquence F2 et est appliquée aux transducteurs selon la répartition de la deuxième colonne du tableau, et ainsi de suite...

On obtient donc ainsi successivement un faisceau avant à la fréquence F1, un faisceau arrière à la fréquence F2, un faisceau tribord à la fréquence F1 et un faisceau babord à la fréquence F2.

Comme dans le cas monodirectionnel, ces faisceaux sont émis successivement dans un bref laps de temps et le système attend alors la réception des différents échos affectés d'un écart Doppler dû à la vitesse.

Lorsque ces échos reviennent, il convient de les séparer. En faisant la somme directe de tous les signaux reçus sur les capteurs, on forme deux lobes symétriques inclinés à +/- $\alpha$ comme les lobes d'émission sur l'axe avant/arrière. La formation de ces faisceaux en réception permet en particulier d'éliminer en grande partie les faisceaux correspondant aux émissions tribord/babord. En outre la discrimination entre les échos provenant de l'avant et de l'arrière se fait comme dans le cas monodimensionnel par la différence des fréquences que l'on choisit suffisamment distinctes pour que l'écart Doppler n'entraîne pas une confusion.

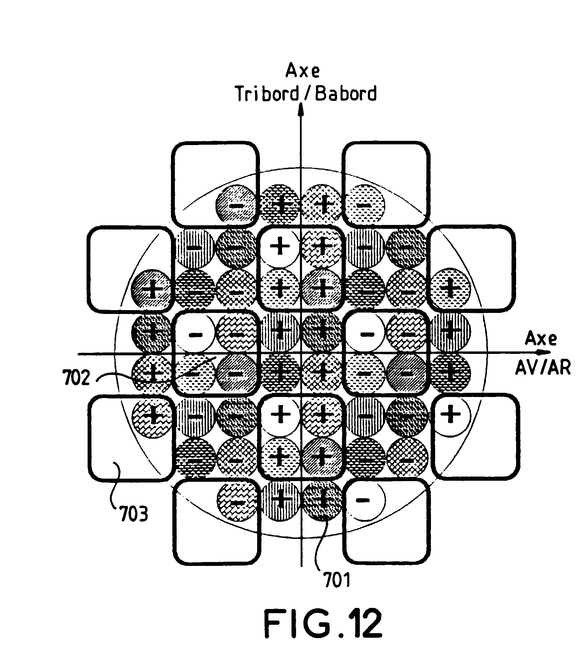

Pour recevoir les échos correspondant aux faisceaux d'émission tribord/babord, il est préférable de former là aussi deux lobes symétriques sur l'axe tribord/babord afin d'éliminer les échos à la même fréquence correspondant à l'axe avant/arrière. Pour cela dans l'opération de sommation des signaux des transducteurs, il faut inverser la polarité de certains transducteurs. Comme représenté sur la figure 12, cette inversion de polarité concerne les transducteurs rassemblés dans des sur-groupes de quatre transducteurs contigüs appartenant aux groupes 2, 4, 6 et 8, comme le sur-groupe 702 sur cette figure 12. Il convient de faire également de même pour les sur-groupes qui sont incomplets, tels que le sur-groupe 703, mais qui comprendraient quatre transducteurs correspondant à la définition du sur-groupe si le réseau formé par l'ensemble des transducteurs de l'antenne était plus important et s'étendait de manière à ce que ces sur-groupes soient pleins.

Les faisceaux de réception tribord/babord étant ainsi formés, la séparation des échos correspondant à l'émission à tribord ou à babord se fait par la distinction entre les fréquences de réception, comme pour les échos avant/arrière.

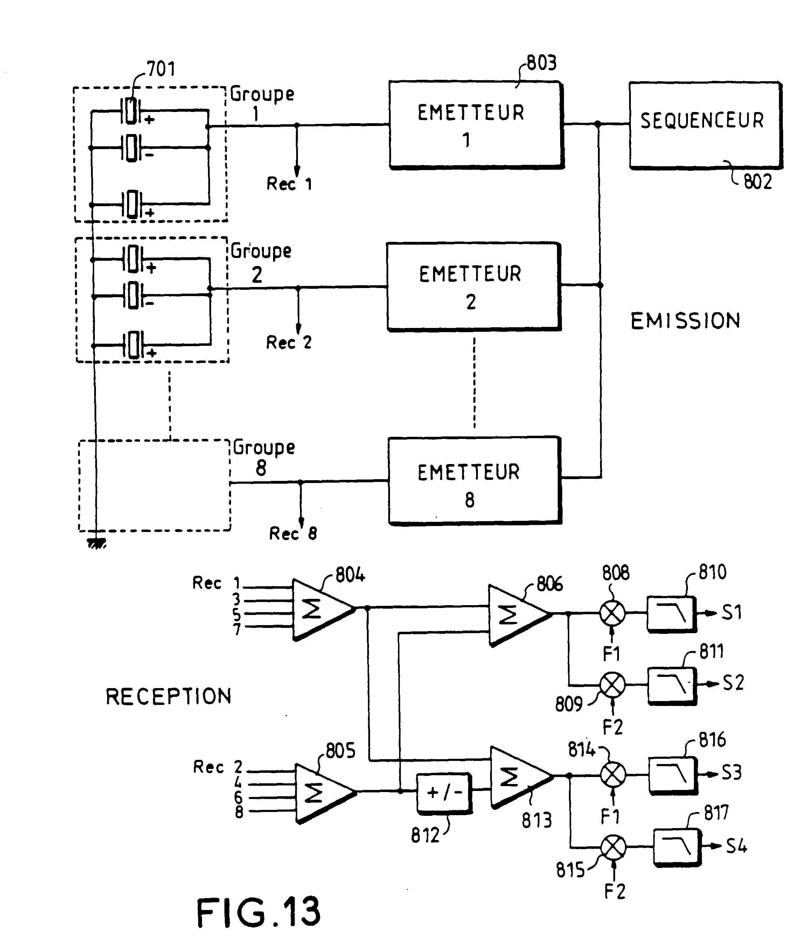

Le schéma synoptique d'un système permettant l'émission et la réception avec une telle antenne est représenté sur la figure 13.

Les transducteurs 701 sont rassemblés en huit groupes correspondant à ceux définis sur la figure 10. Ces groupes sont alimentés respectivement par huit émetteurs 803 qui contiennent, comme sur la figure 6, une mémoire PROM dans laquelle sont mémorisés les signaux à émettre, suivie d'un convertisseur numérique-analogique et d'un amplificateur de puissance. Les signaux mémorisés dans la mémoire correspondent aux séquences définies sur le tableau de la figure 11. L'ensemble de ces émetteurs fonctionne sous le cadencement d'un séquenceur 802.

A la réception, les transducteurs des groupes 1, 3, 5 et 7 sont raccordés sur un sommateur 804 et ceux des groupes 4, 6 et 8 sur un sommateur 805. Un troisième sommateur 806 permet de rassembler les sorties des deux premiers sommateurs pour obtenir le signal de réception avant et arrière. Ce signal est démodulé dans deux mélangeurs 808 et 809 alimentés respectivement par les fréquences F1 et F2. Les signaux en bande de base ainsi obtenus sont filtrés par des filtres passe-bas 810 et 811 qui délivrent les signaux de sortie S1 et S2 correspondant aux échos dans les voies avant et arrière.

Le signal en sortie du sommateur 805 est inversé dans un inverseur 812, puis appliqué sur un sommateur 813 qui reçoit également le signal en sortie du sommateur 804. On obtient ainsi le signal des voies tribord/babord qui est démodulé dans des mélangeurs 814 et 815, lesquels reçoivent respectivement les fréquences F1 et F2. Les signaux en bande de base ainsi obtenus sont filtrés dans des filtres passe-bas 816 et 817 pour obtenir, les signaux de sortie S3 et S4 correspondant aux échos dans les voies babord et tribord.

Les avantages obtenus sont les mêmes que dans le cas monodimensionnel et on peut ajouter que par rapport à une antenne classique comportant quatre groupes de transducteurs inclinés selon les quatre voies à obtenir, on obtient une réduction du diamètre de l'antenne d'environ un tiers.

Suivant une variante de réalisation, on utilise une même fréquence F pour les deux impulsions d'émission successives. Pour séparer les directions à la réception, on forme successivement des voies pointées dans les directions $\pm\alpha$ donnant les signaux de réception. Pour cela on applique les séquences de loi de phase comme à l'émission et la séparation est donc ici spatiale au lieu d'être fréquentielle.

## Revendications

1. Système sonar pour courantomètre et loch Doppler qui comprend un ensemble de transducteurs (201) situé sur une base plane (202) destinée à être fixée horizontalement sur le fond de la coque d'un bâtiment porteur (101), et des moyens (602-608) pour alimenter ces transducteurs avec des signaux présentant une première et une deuxième fréquences distinctes successives et des phases permettant d'obtenir dans au moins un premier plan perpendiculaire au plan de la base un premier lobe d'émission à la première fréquence formant un angle α avec la perpendiculaire au plan de cette base et un deuxième lobe d'émission à la deuxième fréquence formant un angle -α avec la perpendiculaire, et des moyens de sommation (609) des signaux reçus par les transducteurs pour obtenir deux signaux de réception dans le plan d'émission séparés par leur fréquences, caractérisé en ce que les transducteurs (601) sont alignés en rangées espacées d'une distance d et groupées deux par deux avec une polarité d'alimentation inversée d'un groupe au suivant, et que les moyens d'alimentation (602-608) permettent de délivrer pour chaque fréquence des signaux A et B déphasés de 90°, ces signaux étant délivrés aux transducteurs selon une première séquence A, B,A,B ... avec la première fréquence et selon une deuxième séquence A,-B,A,-B... avec la deuxième fréquence; ces deux séquences déterminant les deux lobes d'émission.

2. Système selon la revendication 1, caractérisé en ce que la distance d est égale à la moitié de la longueur d'onde de la fréquence de travail ; l'angle α d'inclinaison des lobes étant alors égal à 30°.

3. Système selon l'une quelconque des revendications 1 et 2, dans lequel les transducteurs (701) sont disposées selon un réseau symétrique par rapport à un premier axe avant/arrière et un deuxième axe tribord/babord perpendiculaire au premier axe, ce réseau étant également symétrique par rapport aux diagonales de ces deux axes, les moyens d'alimentation de ces transducteurs (802,803) permettant d'obtenir lesdits premier et deuxième lobes d'émission dans un plan contenant le premier axe et permettant en outre d'obtenir un troisième et un quatrième lobes d'émission semblables au premier et au deuxième dans un deuxième plan d'émission perpendiculaire au plan de la base et contenant le deuxième axe, et les moyens de sommation (804,805,806,812,813) permettant en outre d'obtenir un deuxième signal de réception de caractéristiques spatiales semblables au premier dans le deuxième plan d émission, caractérisé en ce que les transducteurs sont dans les réseaux alignés en rangées parallèles au deuxième axe, ces rangées étant associées deux par deux avec une polarité d'alimentation inversée d'une association à la suivante que les transducteurs sont en outre répartis en huit groupes permettant d'obtenir les quatre lobes d'émission, que les moyens d'alimentation (802,803) permettent de délivrer pour chaque fréquence des signaux A et B déphasés de 90°, ces signaux étant délivrés aux transducteurs des huit groupes selon une première séquence A,A,B,B.. avec la première fréquence, une deuxième séquence A,A,-B,-B... avec la deuxième fréquence, puis une troisième séquence A, -A,A,-A, B, -B,B,-B avec la première fréquence et une quatrième séquence A,-A,A,-A,-B,B -B,B avec la deuxième fréquence.

4. Système selon la revendication 3, caractérisé en ce que les transducteurs (701) sont rassemblés en surgroupes (702,703) comprenant les transducteurs des groupes 2,4,6 et 8 quand ils sont adjacents, que les moyens de sommation permettent de faire l'addition avec inversion (805,812,806) des signaux de réception ces transducteurs de ces surgroupes avec l'addition directe (804,800) des signaux de réception des autres transducteurs pour obtenir le deuxième signal de réception, et que ces moyens de sommation permettent en outre de faire l'addition directe (804-806) des signaux de réception de tous les transducteurs pour obtenir le premier signal de réception.

5. Système selon l'une quelconque des revendications 3 et 4, caractérisé en ce que les transducteurs sont séparés de chacun des transducteurs adjacents d'une distance ce égaie à la moitié de la fréquence de travail, pour obtenir quatre lobes d'émission inclinés de 30° par rapport à la perpendiculaire au plan de la case supportant les transducteurs.

6. Système selon l'une quelconque des revendications 3 à 5, caractérisé en ce que les transducteurs (701) sont ronds et qu'ils sont répartis à l'intérieur d'un cercle.

**Patentansprüche**

1. Sonarsystem für Strömungsmesser und Doppler-Log, das eine Gesamtheit von Wandlern (201), die sich auf einer ebenen Fläche (202) befinden, die dazu vorgesehen ist, horizontal auf dem Boden des Rumpfes eines Trägerschiffes (101) befestigt zu werden, und Mittel (602-608), um diese Wandler mit Signalen zu versorgen, die eine erste und eine zweite Frequenz, die voneinander verschieden sind und aufeinander folgen, sowie Phasen besitzen, die ermöglichen, in wenigstens einer zur Ebene der Grundfläche senkrechten ersten Ebene eine erste Sendekeule mit der ersten Frequenz, die mit der Normalen der Ebene dieser Grundfläche einen Winkel α bildet, und eine zweite Sendekeule mit der zweiten Frequenz, die mit der Normalen einen Winkel -α bildet, zu erhalten, sowie Summationsmittel (609) für die von den Wandlern empfangenen Signale, um in der Sendeebene zwei Empfangssignale zu erhalten, die durch ihre Frequenzen getrennt sind, enthält, dadurch gekennzeichnet, daß die Wandler (601) in Reihen angeordnet sind, um eine Strecke d beabstandet sind und paarweise mit einer von einer Gruppe zur folgenden entgegengesetzten Versorgungspolarität gruppiert sind, und daß die Versorgungsmittel (602-608) ermöglichen, für jede Frequenz um 90° phasenverschobene Signale A und B auszugeben, wobei diese Signale an die Wandler in einer ersten Folge A, B, A, B ... mit der ersten Frequenz und in einer zweiten Folge A, -B, A, -B ... mit der zweiten Frequenz geliefert werden; wobei diese zwei Folgen die Sendekeulen bestimmen.

2. System nach Anspruch 1, dadurch gekennzeichnet, daß die Strecke d gleich der halben Wellenlänge der Arbeitsfrequenz ist; wobei der Neigungswinkel α der Keulen dann gleich 30° ist.

3. System nach irgendeinem der Ansprüche 1 und 2, in dem die Wandler (701) in einem Gitter angeordnet sind, das in bezug auf eine erste Vorne/Hinten-Achse und eine zweite Steuerbord/Backbord-Achse, die zur ersten Achse senkrecht ist, symmetrisch sind, wobei dieses Gitter außerdem in bezug auf die Diagonalen dieser zwei Achsen symmetrisch ist, wobei die Vorsorgungsmittel dieser Wandler (802, 803) ermöglichen, die ersten und zweiten Sendekeulen in einer die erste Achse enthaltenden Ebene zu erhalten, und außerdem ermöglichen, eine dritte und eine vierte Sendekeule, die zur ersten und zur zweiten ähnlich sind, in einer zweiten Sendeebene, die zur Ebene der Grundfläche senkrecht ist und die zweite Achse enthält, zu erhalten, und wobei die Summationsmittel (804, 805, 806, 812, 813) außerdem ermöglichen, ein zweites Empfangssignal zu erhalten, dessen räumliche Eigenschaften dem ersten in der zweiten Sendeebene ähnlich sind, dadurch gekennzeichnet, daß die Wandler in Gittern vorliegen, die in zur zweiten Achse parallelen Reihen angeordnet sind, wobei diese Reihen paarweise zugeordnet sind, mit einer von einer Zuordnung zur nächsten entgegengesetzten Versorgungspolarität, daß die Wandler außerdem in acht Gruppen verteilt sind, die ermöglichen, die vier Sendekeulen zu erhalten, daß die Versorgungsmittel (802, 803) ermöglichen, für jede Frequenz um 90° phasenverschobene Signale A und B zu liefern, wobei diese Signale an die Wandler der acht Gruppen in einer ersten Folge A,A,B,B ... mit der ersten Frequenz, in einer zweiten Folge A,A,-B,-B ... mit der zweiten Frequenz, dann in einer dritten Folge A,-A,A,-A,B,-B,B,-B mit der ersten Frequenz und in einer vierten Folge A,-A,A,-A,-B,B,-B,B mit der zweiten Frequenz geliefert werden.

4. System nach Anspruch 3, dadurch gekennzeichnet, daß die Wandler (701) in Untergruppen (702, 703) zusammengefaßt sind, die die Wandler der Gruppen 2, 4, 6 und 8 enthalten, wenn sie benachbart sind, daß die Summationsmittel die Ausführung der Addition mit Inversion (805, 812, 806) der Empfangssignale der Wandler dieser Untergruppen mit direkter Addition (804, 806) der Empfangssignale der anderen Wandler ermöglichen, um das zweite Empfangssignal zu erhalten, und daß die Summationsmittel außerdem ermöglichen, die direkte Addition (804-806) der Empfangssignale sämtlicher Wandler auszuführen, um das erste Empfangssignal zu erhalten.

5. System nach irgendeinem der Ansprüche 3 und 4, dadurch gekennzeichnet, daß die Wandler von jedem der benachbarten Wandler um eine Strecke d beabstandet sind, die gleich der halben Arbeitsfrequenz ist, um vier Sendekeulen zu erhalten, die in bezug auf die Normale der Ebene der die Wandler tragenden Grundfläche um 30° geneigt sind.

6. System nach irgendeinem der Ansprüche 3 bis 5, dadurch gekennzeichnet, daß die Wandler (701) rund sind und innerhalb eines Kreises verteilt sind.

**Claims**

1. Sonar system for current meter and Doppler log, which comprises a set of transducers (201) situated on a plane base (202) intended to be fixed horizontally on the bottom of the hull of a carrier boat (101), and means (602-608) for feeding these transducers with signals exhibiting a first and a second successive distinct frequencies and phases making it possible to obtain in at least a first plane perpendicular to the plane of the base, a first emission lobe at the first frequency forming an angle α with the perpendicular to the plane of this base and a second emission lobe at the second frequency forming an angle -α with the perpendicular, and means of summation (609) of the signals received by the transducers in order to obtain two reception signals in the emission plane separated by their frequencies, characterized in that the transducers (601) are aligned in rows spaced apart by a distance d and grouped in twos with a feed polarity inverted from one group to the next, and that the feed means (602-608) make it possible to deliver, for each frequency, signals A and B which are 90° out of phase, these signals being delivered to the transducers in a first sequence A, B, A, B ... with the first frequency and in a second sequence A, -B, A, -B ... with the second frequency; these two sequences determining the two emission lobes.

2. System according to Claim 1, characterized in that the distance d is equal to half the wavelength of the

7

working frequency; the angle $\alpha$ of inclination of the lobes then being equal to 30°.

3. System according to any one of Claims 1 and 2, in which the transducers (701) are arranged in an array which is symmetric with respect to a first fore/aft axis and a second starboard/port axis perpendicular to the first axis, this array also being symmetric with respect to the diagonals of these two axes, the means of feeding these transducers (802, 803) making it possible to obtain the said first and second emission lobes in a plane containing the first axis and moreover making it possible to obtain a third and a fourth emission lobes similar to the first and to the second in a second emission plane perpendicular to the plane of the base and containing the second axis, and the means of summation (804, 805, 806, 812, 813) furthermore making it possible to obtain a second reception signal with spatial characteristics similar to the first in the second emission plane, characterized in that the transducers are in the arrays aligned in rows parallel to the second axis, these rows being associated in twos with a feed polarity inverted from one association to the next, in that the transducers are moreover distributed into eight groups making it possible to obtain the four emission lobes, in that the feed means (802, 803) make it possible to deliver, for each frequency, signals A and B which are 90° out of phase, these signals being delivered to the transducers of the eight groups in a first sequence A, A, B, B ... with the first frequency, a second sequence A, A, -B, -B ... with the second frequency, and then a third sequence A, -A, A, -A, B, -B, B, -B with the first frequency and a fourth sequence A, -A, A, -A, -B, B, -B, B with the second frequency.

4. System according to Claim 3, characterized in that the transducers (701) are assembled into supergroups (702, 703) comprising the transducers of groups 2, 4, 6 and 8 when they are adjacent, in that the summation means make it possible to carry out the addition with inversion (805, 812, 806) of the reception signals of the transducers of these supergroups together with the direct addition (804, 806) of the reception signals of the other transducers in order to obtain the second reception signal, and in that these summation means moreover make it possible to carry out the direct addition (804-806) of the reception signals of all the transducers in order to obtain the first reception signal.

5. System according to any one of Claims 3 to 4, characterized in that the transducers are separated from each of the adjacent transducers by a distance d equal to half the working frequency, in order to obtain four emission lobes inclined by 30° with respect to the perpendicular to the plane of the base supporting the transducers.

6. System according to any one of Claims 3 to 5, characterized in that the transducers (701) are round and that they are distributed inside a circle.

FIG.1

FIG.2

| Rangée | 1 | 2 | 3 | 4 | 5 | 6 | 7 | 8 | 9 | 10 | |
|---|---|---|---|---|---|---|---|---|---|---|---|
| Phase | + | + | − | − | + | + | + | − | + | + | |
| Séquence 1 | A | B | A | B | A | B | A | B | A | B | Fréquence F1 |
| Séquence 2 | A | -B | A | -B | A | -B | A | -B | A | -B | Fréquence F2 |

FIG.3

| Séquence 1 | 0 | 90 | 180 | -90 | 0 | 90 | 180 | -90 | 0 | 90 |
|------------|---|----|----|----|---|----|----|----|---|----|
| Séquence 2 | 0 | -90 | 180 | 90 | 0 | -90 | 180 | 90 | 0 | -90 |
| Rangée | 1 | 2 | 3 | 4 | 5 | 6 | 7 | 8 | 9 | 10 |

## FIG. 4

| Phase | 0 | 0 | 180 | 180 | 0 | 0 | 180 | 180 | 0 | 0 |
|-------|---|---|-----|-----|---|---|-----|-----|---|---|
| Rangée | 1 | 2 | 3 | 4 | 5 | 6 | 7 | 8 | 9 | 10 |

## FIG. 5

## FIG. 7

FIG.6

FIG. 8

FIG. 9

FIG.10

FIG.11

| GROUPE | pulse 1 Faisceau AV | pulse 2 Faisceau AR | pulse 3 Faisceau Tribord | pulse 4 Faisceau Babord |
|---|---|---|---|---|
| 1 | A | A | A | A |
| 2 | A | A | -A | -A |
| 3 | B | -B | A | A |
| 4 | B | -B | -A | -A |
| 5 | A | A | B | -B |
| 6 | A | A | -B | B |
| 7 | B | -B | B | -B |
| 8 | B | -B | -B | B |
| Fréqu. | F1 | F2 | F1 | F2 |

FIG.12

FIG.13